# EUROPEAN PATENT SPECIFICATION

(11) **EP 4 195 483 B1**
(45) Date of publication and mention of the grant of the patent: **24.12.2025**
(21) Application number: 21865702.1
(22) Date of filing: 22.07.2021
(51) Int. Cl.: H02M 3/156, H02M 7/42, H02M 1/32, H02H 11/00, H02S 40/34, H02H 3/087, H02M 3/158, H02H 7/20, H02J 3/38, H02S 50/00

(54) **DIRECT-CURRENT COMBINER BOX, PHOTOVOLTAIC SYSTEM AND PROTECTION METHOD**
GLEICHSTROM-KOMBINATORBOX, FOTOVOLTAISCHES SYSTEM UND SCHUTZVERFAHREN
BOÎTIER COMBINATEUR DE COURANT CONTINU, SYSTÈME PHOTOVOLTAÏQUE ET PROCÉDÉ DE PROTECTION

(30) Priority: 11.09.2020 CN 202010953933
(43) Date of publication of application: 14.06.2023
(73) Proprietor: Huawei Digital Power Technologies Co., Ltd., Shenzhen, Guangdong 518043 (CN)
(72) Inventor: WANG, Chen, Shenzhen, Guangdong 518129 (CN); ZHANG, Yanzhong, Shenzhen, Guangdong 518129 (CN)
(74) Representative: Pfenning, Meinig & Partner mbB
(86) International application number: PCT/CN2021/107738
(87) International publication number: WO 2022/052646

(56) References cited:
- WO-A1-2020/099157
- CN-A- 103 715 983
- CN-A- 104 779 915
- CN-A- 109 510 450
- CN-A- 110 224 381
- CN-A- 110 224 381
- CN-A- 111 585 307
- CN-A- 112 260 533
- JP-A- 2001 085 716
- US-A1- 2009 207 543
- US-A1- 2015 280 423

## Description

### TECHNICAL FIELD

This application relates to the field of photovoltaic power generation technologies, and in particular, to a direct current combiner box, a photovoltaic system, and a protection method.

### BACKGROUND

Currently, increasingly serious environmental pollution draws more worldwide attention to photovoltaic power generation.

During photovoltaic power generation, a quantity of electricity produced by a photovoltaic cell is limited. Therefore, a plurality of cell panel strings usually need to be connected in parallel to input electric energy to a combiner box.

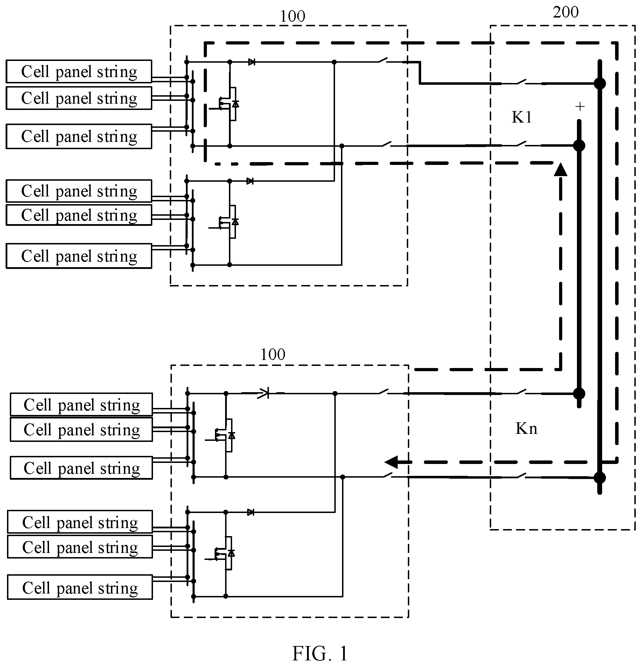

FIG. 1 is a schematic diagram of a photovoltaic system according to the conventional technology.

Currently, a plurality of cell panel strings are connected in parallel and then connected to an input port of a direct current combiner box. For ease of description, the direct current combiner box is referred to as a combiner box 100. An output port of the combiner box 100 is connected to an input port of an inverter 200. In FIG. 1, a plurality of combiner boxes 100 are connected to the input port of the inverter 200. To be specific, output ports of the plurality of combiner boxes 100 are connected in parallel to the input port of the inverter 200.

Currently, some combiner boxes have a maximum power point tracking (MPPT, Maximum Power Point Tracking) function, and a DC/DC converter, usually a boost DC/DC converter, is disposed in each combiner box. In FIG. 1, that the boost DC/DC converter is a boost is used as an example for description.

The combiner box 100 is usually far away from the inverter 200, and the two are connected through a positive cable and a negative cable. In actual application, insulation leather of the positive cable and the negative cable is easily damaged to cause a short circuit, or the positive cable and the negative cable of the combiner box are reversely connected when connected to an inverter. A dashed line in FIG. 1 represents a current path when the positive cable and the negative cable of the combiner box are reversely connected.

When output switches (K1 to Kn) of each combiner box are closed, an output voltage of the combiner box rapidly goes to zero, an output current is a sum of short-circuit currents input to the cell panel strings, and all the currents are fed into the combiner box in which there is a short-circuited branch or the positive cable and the negative cable are reversely connected. Therefore, cables are burned out due to an overcurrent or the combiner box is damaged.

CN110224381A discloses a photovoltaic inverter, wherein the photovoltaic inverter comprises a inverter, a DC/AC converter, a positive direct current bus, a negative direct current bus, a drive control circuit, and at least one first unit, wherein a first end of the positive direct current bus and a first end of the negative direct current bus are electrically connected to the DC/AC converter respectively, and the first unit comprises a first bypass circuit and an isolation circuit, wherein the first unit includes a first bypass circuit and an isolation circuit, when the drive control circuit detects that the positive direct current bus and the negative direct current bus are faulty, the drive control circuit controls all the isolation circuits to be disconnected, so that the first photovoltaic modules are disconnected from the positive direct current bus or the negative direct current bus. Therefore, photovoltaic modules connected to the first units cannot continue to transfer energy to a faulty point, energy transferred to the faulty point is reduced, and further spreading of the faulty point can be prevented.
US2009/0207543A1 discloses a system and method for fault detection and hazard prevention in photovoltaic source output circuit, wherein the system comprise photovoltaic source, controllers monitoring the output of the photovoltaic source and a (optional) combiner used for combining DC output power from the photovoltaic sources.
CN 111 585 307 A discloses a startup method, an application device and a system for a photovoltaic fast shutdown system, which are used to reduce the photovoltaic components in the photovoltaic fast shutdown system on the basis of realizing the startup of the photovoltaic fast shutdown system.
US 2015/280423 A1 discloses a method and a device for the reverse current protection of a number of strings of a photovoltaic generator being connected in parallel to a common DC link.

### SUMMARY

The subject matter of the present invention is defined by the appended claims. Further embodiments not covered by the claims are provided for background information to promote a deeper understanding of the invention. To resolve the foregoing technical problems, this application provides a direct current combiner box, a photovoltaic system, and a protection method according to the independent claims, so that a combiner box and a cable can be protected timely when the cable is short-circuited due to a damage or a positive cable and a negative cable are reversely connected.

This application provides a direct current combiner box. The combiner box is connected between a photovoltaic array and an inverter. A switching device is connected in parallel between a positive input port and a negative output port of the direct current combiner box. The switching device may be already included inside the combiner box or may be additionally added. This is not limited in this embodiment of this application. When a controller determines that a short circuit occurs to an output port of the direct current combiner box, or the output port of the direct current combiner box is reversely connected, the controller controls the switching device to be closed, so that the switching device, the positive input port, and a negative input port form a closed loop.

Specifically, the controller may determine, based on at least one of an input parameter and an output parameter that are collected by a sampling circuit and that are of the combiner box, whether a short circuit occurs between a positive output cable and a negative output cable or a positive output cable and a negative output cable are reversely connected.

When the switching device is closed, the positive input port and the negative input port are connected through the closed switching device. A current path is that a current flows from the positive input port of the combiner box to the negative input port of the combiner box through the closed switching device, that is, a closed loop is formed. Therefore, when a short circuit occurs to the output port of the combiner box or a next circuit of the output port, most short-circuit currents flow through the closed switching device to form a return current, so that a current that is generated at an input port of the combiner box and that is output from the output port of the combiner is greatly reduced, that is, an output current of the combiner box is reduced. Therefore, the positive output cable and the negative output cable of the combiner box can be prevented from overcurrent burnout when the output current of the combiner box is excessively large, that is, a power cable is protected from overcurrent burnout. In addition, in this technical solution, the combiner box may be protected when the positive output cable and the negative output cable are reversely connected.

Preferably, the sampling circuit may collect the output parameter of the combiner box or the input parameter of the combiner box. The output parameter may include an output current and an output voltage, and the input parameter may include an input voltage and an input current. That is, the sampling circuit may collect at least one of the following parameters of the combiner box: the output voltage of the combiner box, the output current of the combiner box, the input voltage of the combiner bo,. and the input current of the combiner box. The controller is configured to, when the output voltage or the input voltage rapidly drops or when the input current or the output current rapidly rises, determine that a short circuit or reverse connection occurs to the output port of the combiner box. That is, when the at least one parameter meets at least one of the following conditions, the controller controls the switching device to be closed. The at least one condition includes: A drop rate of the output voltage of the combiner box exceeds a first preset value, a drop rate of the input voltage of the combiner box exceeds a second preset value, a rise rate of the output current of the combiner box exceeds a third preset value, and a rise rate of the input current of the combiner box exceeds a fourth preset value.

A DC/DC converter is included inside the combiner box, and the switching device is implemented by a main power tube in the DC/DC converter. To be specific, when to control the switching device to be closed, the main power tube is controlled to be closed. The DC/DC converter converts a direct current output by the photovoltaic array and outputs a converted current to the inverter. The switching device includes at least the main power tube in the DC/DC converter. The controller controls the main power tube in the DC/DC converter to be closed, so that the main power tube, the positive input port, and the negative input port form a closed loop.

Preferably, when a short circuit or reverse connection occurs to the output port of the combiner box and the main power tube needs to be closed, to protect the main power tube operating at a low voltage and protect the main power tube from being damaged by a high voltage, the main power tube may be controlled to operate only when a voltage of the photovoltaic array is lower than a preset voltage value. To be specific, the controller is configured to control the main power tube in the DC/DC converter to be closed when the at least one parameter meets the at least one condition and an input voltage of the DC/DC converter is lower than the preset voltage value.

Preferably, the DC/DC converter includes at least one of the following: a two-level boost circuit, a three-level boost circuit, and a buck-boost circuit.

Preferably, when the DC/DC converter includes the three-level boost circuit, the switching device includes at least two main power tubes connected in series in the three-level boost circuit, and the two main power tubes connected in series are connected between the positive input port and the negative input port. The controller is configured to control the two main power tubes connected in series to be closed when the at least one parameter meets the at least one condition and the input voltage of the DC/DC converter is lower than the preset voltage value.

The combiner box includes the DC/DC converter and other switches connected in parallel are disposed between the positive input port and the negative input port of the combiner box, and the controller is configured to, when controlling the main power tube in the DC/DC converter to be closed, control a switch, connected in parallel to the main power tube in the DC/DC converter, to be closed. In this way, a shunting branch may be added, a current at the output port may be shunted to a great extent, and a current flowing to the output port of the combiner box may be reduced.

Preferably, to prevent a next inverter from being affected by a short circuit or a reverse connection of the output port of the combiner box, an output switch at the output port of the combiner box is closed when the switching device is closed. Because a current at the output port of the combiner box has been shunted and reduced, the output switch is easily opened, and a condition that the output switch is adhered and cannot be opened due to an excessive large current does not occur. The output switch is connected in series to the positive output port and/or the negative output port of the combiner box.

Preferably, the combiner box includes at least two DC/DC converters, namely, a plurality of DC/DC converters. Output ports of the at least two DC/DC converters are connected in parallel. Input ports of the at least two DC/DC converters are connected to different photovoltaic strings respectively. All the photovoltaic strings form the photovoltaic array.

This application further provides an inverter, including a DC/DC conversion circuit, an inverter circuit, a sampling circuit, and a controller. An input port of the DC/DC conversion circuit is connected to a photovoltaic array. The DC/DC conversion circuit converts a direct current output by the photovoltaic array and outputs a converted current to the inverter circuit. The inverter circuit converts the direct current output by the DC/DC conversion circuit into an alternating current and outputs the alternating current. The sampling circuit is configured to collect at least one of an input parameter and an output parameter of the DC/DC conversion circuit. The controller controls a main power tube of the DC/DC conversion circuit to be closed when determining, based on the at least one parameter, that a short circuit occurs to an output port of the DC/DC conversion circuit, the inverter circuit, or an output port of the inverter circuit, so that the main power tube and the input port of the DC/DC conversion circuit form a closed loop.

Preferably, the at least one parameter includes an output voltage of the DC/DC conversion circuit, an output current of the DC/DC conversion circuit, an input voltage of the DC/DC conversion circuit, and an input current of the DC/DC conversion circuit. The controller is configured to control a switching device to be closed when the at least one parameter meets at least one of the following conditions. The at least one condition includes: A drop rate of the output voltage of the DC/DC conversion circuit exceeds a fifth preset value, a drop rate of the input voltage of the DC/DC conversion circuit exceeds a sixth preset value, a rise rate of the output current of the DC/DC conversion circuit exceeds a seventh preset value, and a rise rate of the input current of the DC/DC conversion circuit exceeds an eighth preset value.

This embodiment of this application further provides a photovoltaic system, including a photovoltaic array and a photovoltaic device. The photovoltaic device is the combiner box or inverter described above, and an input port of the photovoltaic device is connected to the photovoltaic array.

Preferably, when the photovoltaic device is the combiner box, the photovoltaic system may include a plurality of combiner boxes, and output ports of the plurality of combiner boxes may be connected in parallel. To be specific, there are at least two combiner boxes, and output ports of the two combiner boxes are connected to an input port of the inverter.

If a short circuit fault or reverse connection fault occurs to the combiner box, the photovoltaic system is timely protected, so that the entire photovoltaic system is not damaged due to the short circuit. In addition, when the photovoltaic device in the photovoltaic system is the inverter, because the inverter includes a DC/DC conversion circuit and main power tubes in the DC/DC conversion circuit are connected in parallel between a positive input port and a negative input port of the photovoltaic device, the main power tubes may be controlled to be closed to protect an output port when a short circuit or reverse connection occurs.

This embodiment of this application further provides a direct current combiner box protection method, which is applied to the combiner box described above. The method includes: collecting at least one of an input parameter and an output parameter of the combiner box; and controlling a switching device to be closed when determining, based on the at least one parameter, that a short circuit occurs between a positive output cable and a negative output cable or a positive output cable and a negative output cable are reversely connected, so that the switching device, a positive input port, and a negative input port form a closed loop.

Preferably, the controlling a switching device to be closed when determining, based on the at least one parameter, that a short circuit occurs between a positive output cable and a negative output cable or a positive output cable and a negative output cable are reversely connected specifically includes: controlling the switching device to be closed when the at least one parameter meets at least one of the following conditions, where the at least one condition includes: A drop rate of an output voltage of the combiner box exceeds a first preset value, a drop rate of an input voltage of the combiner box exceeds a second preset value, a rise rate of an output current of the combiner box exceeds a third preset value, and a rise rate of an input current of the combiner box exceeds a fourth preset value; and the at least one parameter includes the output voltage of the combiner box, the output current of the combiner box, the input voltage of the combiner box, and the input current of the combiner box.

Preferably, when the combiner box includes a DC/DC converter, the switching device includes at least a main power tube in the DC/DC converter. The controlling the switching device to be closed specifically includes: controlling the main power tube in the DC/DC converter to be closed when the at least one parameter meets at least one condition and an input voltage of the DC/DC converter is less than a preset voltage value.

Preferably, the combiner box further includes an output switch, and the output switch is connected in series to a positive output port and/or a negative output port of the combiner box. After the controlling the main power tube in the DC/DC converter to be closed, the method further includes: controlling the output switch of the combiner box to be opened.

In this method, when the at least one of the input parameter and the output parameter of the combiner box is detected and used to determine that a short circuit occurs between the positive output cable and the negative output cable of the combiner box or the positive output cable and the negative output cable are reversely connected, the switching device between the positive input port and the negative input port of the combiner box is controlled to be closed. In this case, a current path is that a current flows from the positive input port of the combiner box to the negative input port of the combiner box through the closed switching device, that is, a closed loop is formed. In this way, when a short circuit occurs, most short-circuit currents flow through the closed switching device to form a return current, so that a current output from the combiner box is greatly reduced. Therefore, a power cable can be prevented from overcurrent burnout when an output current of the combiner box is excessively large, or the combiner box is prevented from being damaged when the positive output cable and the negative output cable are reversely connected.

Compared with the conventional technology, the technical solution provided in this embodiment of this application have the following advantages:

In this solution, when the at least one of the input parameter and the output parameter of the combiner box is detected and used to determine that a short circuit occurs between the positive output cable and the negative output cable of the combiner box or the positive output cable and the negative output cable are reversely connected, the controller is configured to control the switching device between the positive input port and the negative input port of the combiner box to be closed. The switching device is connected in parallel between the positive input port and the negative input port of the combiner box. Therefore, the positive input port and the negative input port are turned on when the switching device is closed, and a current path is that a current flows from the positive input port of the combiner box to the negative input port of the combiner box through the closed switching device, that is, a closed loop is formed. Therefore, when a short circuit occurs to the output port of the combiner box or a next circuit of the output port, most short-circuit currents flow through the closed switching device to form a return current, so that a current that is generated at an input port of the combiner box and that is output from the output port of the combiner is greatly reduced, that is, an output current of the combiner box is reduced. Therefore, the positive output cable and the negative output cable of the combiner box can be prevented from overcurrent burnout when the output current of the combiner box is excessively large, that is, a power cable is protected from overcurrent burnout. In addition, in this technical solution, the combiner box may be protected when the positive output cable and the negative output cable are reversely connected.

### BRIEF DESCRIPTION OF DRAWINGS

FIG. 1 is a schematic diagram of a photovoltaic system according to the conventional technology;
FIG. 2 is a schematic diagram of a direct current combiner box according to an embodiment of this application;
FIG. 3 is a schematic diagram of a combiner box that includes a two-level boost circuit according to an embodiment of this application;
FIG. 4 is a schematic diagram of a combiner box that includes a three-level boost circuit according to an embodiment of this application;
FIG. 5 is a schematic diagram of a simple combiner box according to an embodiment of this application;
FIG. 6 is a schematic diagram of an inverter according to an embodiment of this application;
FIG. 7 is a schematic diagram of a photovoltaic system according to an embodiment of this application; and
FIG. 8 is a flowchart of a direct current combiner box protection method according to an embodiment of this application.

### DESCRIPTION OF EMBODIMENTS

To enable a person skilled in the art to better understand the technical solutions provided in embodiments of this application, the following first describes an application scenario, applied to the field of photovoltaic power generation technologies, of the technical solutions provided in embodiments of this application. A combiner box is a device commonly used in a photovoltaic power generation system. An input port of the combiner box is usually connected to a photovoltaic array. To provide a power generation capability, the combiner box needs to converge energy of a plurality of photovoltaic strings. Because the photovoltaic array outputs a direct current, the combiner box is also referred to as a direct current combiner box. Certainly, an alternating current combiner box may be disposed at an inverter side. The direct current combiner box is specifically described in embodiments of this application. An output port of the direct current combiner box is connected to an inverter, and the inverter inverts a direct current into an alternating current and feeds the alternating current back to an alternating current power network. Usually, the output port of the combiner box includes a positive output port and a negative output port, the positive output port of the combiner box is connected to a positive input port of the inverter through a positive output cable, and the negative output port of the combiner box is connected to a negative input port of the inverter through a negative output cable.

The technical solutions provided in embodiments of this application are as follows: When a short circuit occurs between the positive output cable and the negative output cable of the combiner box or the positive output cable and the negative output cable are reversely connected, a controller controls a switching device, connected in parallel between a positive input port and a negative input port of the combiner box, to be closed, so that the positive input port of the combiner box, the negative input port of the combiner box, and the closed switching device form a closed loop. To be specific, the switching device provides a current path when a short circuit or reverse connection occurs to an output port of the combiner box, so that an output current of the combiner box is shunted, and a current output from the output port of the combiner box is reduced. Therefore, an excessively large short-circuit current is prevented from damaging the positive output cable and the negative output cable, that is, the positive output cable and the negative output cable of the combiner box are protected. In addition, the combiner box is protected from being damaged when the positive output cable and the negative output cable of the combiner box are reversely connected.

The technical solutions provided in embodiments of this application are applicable to a common combiner box, namely, a combiner box in which a DC/DC converter is not disposed, for example, a combiner box without a boost function. When the technical solutions are applied to the common combiner box, only a switching device needs to be connected in parallel between a positive input port and a negative input port of the combiner box. When the combiner box does not have a switching device, such a switching device can be added. In addition, the technical solutions provided in embodiments of this application are also applicable to a combiner box with a voltage transformation function, for example, a boost function, a buck function, and a boost-buck function. To be specific, the combiner box may include a DC/DC converter, for example, a boost converter is included inside the combiner box. Because the DC/DC converter has a switching device, to be specific, a main power tube in the DC/DC converter is used as a switching device, when a short circuit occurs between a positive output cable and a negative output cable of the combiner box or the positive output cable and the negative output cable are reversely connected, the main power tube in the DC/DC converter is controlled to be closed to protect the combiner box.

The switching device in embodiments of this application includes but is not limited to a device having a breaking capability, for example, an IGBT, a MOSFET, a transistor, a relay, or a circuit breaker.

To enable a person skilled in the art to better understand and implement the technical solutions provided in embodiments of this application, the following describes specific implementations of the technical solutions with reference to the drawings.

### Combiner box embodiment 1

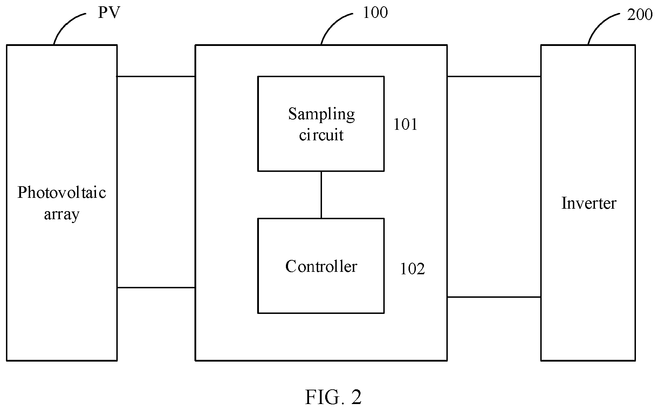

FIG. 2 is a schematic diagram of a direct current combiner box provided in this embodiment of this application.

In this embodiment, an output port of the direct current combiner box 100 is connected to an input port of an inverter 200, that is, the combiner box is located on a direct current side.

For ease of description, the direct current combiner box is referred to as a combiner box in the following.

An input port of the combiner box 100 is connected to a photovoltaic array PV.

In practice, the photovoltaic array PV may include a plurality of photovoltaic strings that may be connected in parallel. To provide an electric energy output capacity, each photovoltaic string includes a plurality of photovoltaic panels connected in series.

A positive output port of the combiner box 100 is connected to a positive input port of the inverter 200 through a positive output cable, and a negative output port of the combiner box 100 is connected to a negative input port of the inverter 200 through a negative output cable.

A positive input port of the combiner box 100 is connected to a first end of the photovoltaic array PV, and a negative input port of the combiner box 100 is connected to a second end of the photovoltaic array PV.

The combiner box includes a sampling circuit 101, a controller 102, and a switching device (not shown in the figure).

The switching device is connected between the positive input port and the negative input port of the combiner box.

Each combiner box, especially a combiner box having a maximum power point tracking (MPPT, Maximum Power Point Tracking) function, may include the controller 102.

The sampling circuit 101 is configured to collect at least one of an input parameter and an output parameter of the combiner box 100.

The controller 102 is configured to control the switching device to be closed when determining, based on the at least one parameter, that a short circuit occurs between the positive output cable and the negative output cable of the combiner box or the positive output cable and the negative output cable are reversely connected, so that the positive input port of the combiner box, the negative input port of the combiner box, and the switching device form a closed loop. That is, when a short circuit occurs, a current flows from the positive input port of the combiner box to the negative input port of the combiner box through the switching device to form a return current.

In actual application, the input parameter or output parameter of the combiner box may be collected to determine whether a short circuit or reverse connection occurs to the output port of the combiner box and a next circuit of the output port.

The foregoing parameters include a voltage or a current.

For example, when collecting the input parameter of the combiner box, the sampling circuit may collect an input voltage of the combiner box or an input current of the combiner box.

When collecting the output parameter of the combiner box, the sampling circuit may collect an output voltage of the combiner box or an output current of the combiner box.

When a short circuit occurs between the positive output cable and the negative output cable of the combiner box, the input voltage or output voltage of the combiner box drops sharply, and the input current and output current of the combiner box rise sharply. Therefore, when the at least one parameter collected by the sampling circuit meets at least one of the following conditions, the controller determines that a short circuit or reverse connection occurs to an output port of the combiner box, and the controller controls the switching device to be closed. The at least one condition includes: A drop rate of the output voltage of the combiner box exceeds a first preset value, a drop rate of the input voltage of the combiner box exceeds a second preset value, a rise rate of the output current of the combiner box exceeds a third preset value, and a rise rate of the input current of the combiner box exceeds a fourth preset value.

In specific application, drop rates and rise rates of the parameters each may be obtained by using a parameter change slope. In an example in which the output voltage of the combiner box is collected, if a slope when the output voltage drops exceeds the first preset value, it is considered that the output voltage of the combiner box drops sharply, and it is determined that a short circuit occurs between the positive output cable and the negative output cable of the combiner box. Other parameters are determined in the same way. Details are not described herein again.

In this solution, when the at least one of the input parameter and the output parameter of the combiner box is detected and used to determine that a short circuit occurs between the positive output cable and the negative output cable of the combiner box or the positive output cable and the negative output cable are reversely connected, the switching device between the positive input port and the negative input port of the combiner box is controlled to be closed. The switching device is connected in parallel between the positive input port and the negative input port of the combiner box. Therefore, when the switching device is closed, a current path is that a current flows from the positive input port of the combiner box to the negative input port of the combiner box through the closed switching device, that is, a closed loop is formed. Therefore, when a short circuit occurs, most short-circuit currents flow through the closed switching device and flow through the positive input port and the negative input port of the combiner box to form a return current, so that a current from the input port of the combiner box to the output port of the combiner box is greatly reduced, that is, the output current of the combiner box is reduced. Therefore, the positive output cable and the negative output cable can be prevented from overcurrent burnout when the output current of the combiner box is excessively large, or the combiner box is prevented from being damaged due to an excessively large current when the positive output cable and the negative output cable are reversely connected.

### Combiner box embodiment 2

That a combiner box includes a DC/DC converter is used as an example for description in the following. The DC/DC converter is configured to convert a direct current output by a photovoltaic array and output a converted current to an inverter. Specifically, a boost converter is used as the DC/DC converter for description.

A switching device in the combiner box includes at least a main power tube in the DC/DC converter.

When a short circuit occurs between a positive output cable and a negative output cable of the combiner box or a positive output cable and a negative output cable are reversely connected, a controller is specifically configured to control the main power tube in the DC/DC converter to be closed, so that the main power tube, a positive input port, and a negative input port form a closed loop. To be specific, the controller may output a pulse drive signal, for example, a PWM signal, to the main power tube in the DC/DC converter, to control the main power tube. A high level of the PWM signal corresponds to a closed main power tube, and a low level of the PWM signal corresponds to an opened main power tube.

In this embodiment of this application, a specific topological form of the DC/DC converter is not specifically limited. For example, the DC/DC circuit includes at least one of the following: a two-level boost circuit, a three-level boost circuit, and a buck-boost circuit.

That the DC/DC converter in the combiner box is a two-level boost circuit is used as an example for description in the following.

The combiner box includes at least two DC/DC converters.

Output ports of the two DC/DC converters are connected in parallel.

Input ports of the at least two DC/DC converters are connected to different photovoltaic strings, and all the photovoltaic strings form the photovoltaic array.

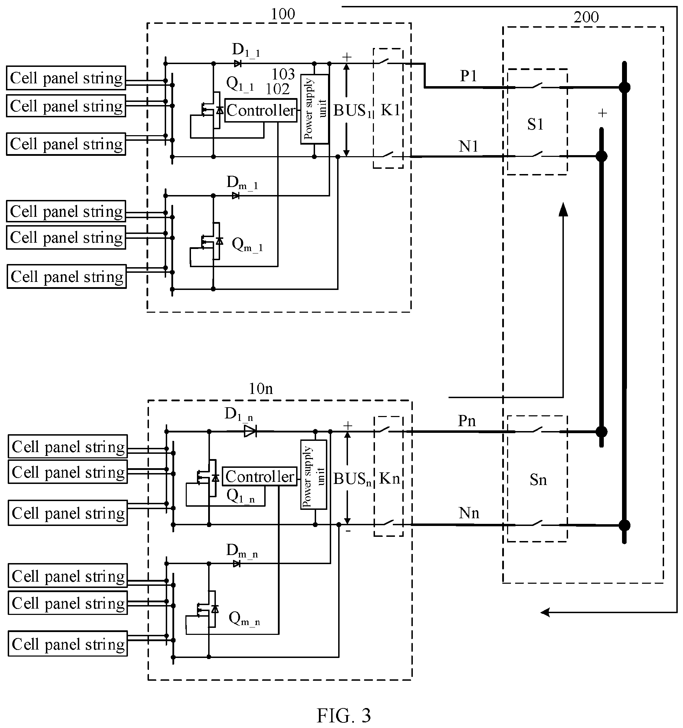

FIG. 3 is a schematic diagram of a combiner box that includes a two-level boost circuit according to an embodiment of this application.

For example, a photovoltaic system includes n combiner boxes, namely, a combiner box 100 to a combiner box 10n. n may be an integer greater than or equal to 1.

An example in which each combiner box includes m DC/DC converters is used for description, where m may be an integer greater than or equal to 2.

Output ports of the m DC/DC converters are connected in parallel, and output ports of the n combiner boxes 100 are connected to an input port of an inverter 200, and may specifically be connected in parallel inside the inverter 200 or outside the inverter 200.

For ease of understanding, the combiner box 100 is used as an example for description. Each combiner box 100 includes a controller 102. To be specific, the controller 102 of each combiner box 100 independently controls the combiner box corresponding to the controller.

As shown in FIG. 3, the combiner box 100 includes m boost circuits. In a first boost circuit, a main power tube is Q1_1, and a diode is D1_1. In an m^{th} boost circuit, a main power tube is Qm_1 and a diode is Dm_1.

In FIG. 3, output ports of the m boost circuits are connected in parallel. To be specific, the output ports share a direct current bus. As shown in FIG. 3, a direct current bus corresponding to a first combiner box 100 is BUS1, and a direct current bus corresponding to an n^{th} combiner box 10n is BUSn. An output switch of the first combiner box 100 is K1, and an output switch of the n^{th} combiner box 10n is Kn.

It should be noted that the output switch may be connected in series only at a positive output port or a negative output port. Alternatively, the negative output port and the positive output port of the combiner box are connected in series to the output switch, as shown in the figure.

FIG. 3 shows only the controller 102 and a power supply unit 103, but does not show a sampling circuit. For example, the first combiner box 100 includes the controller 102 and the power supply unit 103.

The power supply unit 103 is configured to supply power to the sampling circuit and the controller 102.

The power supply unit 103 may be powered by the direct current bus, a cell panel string, or another independent power supply. This is not specifically limited herein.

It can be learned from the figure that when a positive output cable P1 and a negative output cable N1 of the combiner box 100 are reversely connected, the positive output port of the combiner box 100 is connected to a negative input port of the inverter through the positive output cable P1, and the negative output port of the combiner box 100 is connected to a positive input port of the inverter through the positive output cable N1. An arrow in the figure indicates a current direction when the positive output cable P1 and the negative output cable N1 of the combiner box 100 are reversely connected.

Normally, when the positive output cable P1 and the negative output cable N1 of the combiner box 100 are not reversely connected, the positive output port of the combiner box 100 is connected to the positive input port of the inverter through the positive output cable P1, and the negative output port of the combiner box 100 is connected to the negative input port of the inverter through the positive output cable N1.

Usually, a switch S1 is disposed inside the inverter 200 for safety. To be specific, the output port of the combiner box is connected to the input port of the inverter through the switch S1, and when a fault occurs, S1 is opened, to disconnect the combiner box from the input port of the inverter.

For example, when it is detected that a short circuit or reverse connection occurs to the output port of the combiner box 100, a main power tube Q1 of a boost circuit is controlled to be closed. After Q1 is closed, Q1 and D1 are connected in parallel to shunt a current sent to the combiner box by the cell panel string. D1 has a high conduction voltage drop ratio, so that most short-circuit currents of the cell panel string flow back from Q1, and a small current flows through D1. Therefore, most currents do not flow out from the output port of the combiner box. In this way, a power cable is prevented from overcurrent burnout when an output current of the combiner box is excessively large, or the combiner box is prevented from being damaged when the output port is reversely connected.

In another case, the combiner box in FIG. 3 includes a plurality of boost circuits connected in parallel, and an input port of each boost circuit corresponds to an independent cell panel string. Therefore, when the input port of one boost circuit has a problem, for example, an input voltage drops sharply or an input current rises sharply, a main power tube in the boost circuit is controlled to be closed, to protect a corresponding combiner box and cable.

When it is detected that a short circuit or reverse connection occurs to an output port of the combiner box 100, the main power tubes Q1 to Qm in the boost circuits are controlled to be closed. After Q1 to Qm are closed, Q1 to Qm and D1 to Dm are connected in parallel to shunt a current sent to the combiner box by the cell panel string. D1 to Dm have a high conduction voltage drop ratio, so that the most short-circuit currents of the cell panel string flow back from Q1 to Qm, and a small current flows through D1 to Dm. Therefore, most currents do not flow out from the output port of the combiner box. In this way, the power cable is prevented from overcurrent burnout when the output current of the combiner box is excessively large, or the combiner box is prevented from being damaged when the output port is reversely connected.

In this embodiment, when a part in the combiner box is short-circuited, all switching transistors, connected to the faulty part, of the combiner box are controlled to be closed, to prevent another combiner box from being burned out when a current of the another combiner box flows through the short-circuited part.

An input filter capacitor is connected between a positive input port and a negative input port of the cell panel string. Therefore, when a voltage of the cell panel string is high, the main power tubes are controlled to be turned on, and the input filter capacitor is discharged. In this case, a current flowing through the main power tube increases instantly, and Q1 to Qm may be damaged. Therefore, an input voltage of the DC/DC converter, namely, a PV voltage corresponding to the cell panel string, needs to be detected. To be specific, the controller is specifically configured to, when the input voltage of the DC/DC converter is less than a preset voltage value, control the main power tube in the DC/DC converter to be closed, so that the main power tube is not damaged due to overcurrent. A specific preset voltage value may be set based on a type of the main power tube and specific parameters of a withstand voltage and a withstand current.

If the combiner box further includes a switching device connected in parallel to the main power tube in the DC/DC converter, the controller 102 is further configured to, when controlling the main power tube in the DC/DC converter to be closed, control the switching device connected in parallel to the main power tube in the DC/DC converter, to further shunt an input current of the combiner box and reduce a current flowing into the output port of the combiner box. Further, a power cable between the combiner box and the inverter and the combiner box may be better protected.

Usually, the output port of the combiner box 100 further includes an output switch K1. Both the positive output cable and the negative output cable have switch contacts that may be connected in series to K1.

As shown in the figure, the output switch K1 is connected in series to the output port of the combiner box 100.

The controller 102 is further configured to, when or after controlling the switching device to be closed, control the output switch to be opened. K1 is mainly configured to disconnect the combiner box from the inverter.

When the switching device is closed, an output voltage of the combiner box 100 is clamped at a lower voltage. Therefore, after the switching device is closed, K1 is opened. A risk that K1 cannot be opened due to a large withstanding voltage is avoided.

In addition, after K1 is opened, the switching device may be controlled to be opened. In this case, because K1 is opened, the switching device is opened, and a next circuit is not damaged. For example, after K1 is opened, the direct current bus is powered off and the switching device is automatically opened.

The combiner box provided in this embodiment includes a two-level boost circuit. When a short circuit or reverse connection occurs to the output port of the combiner box, a main power tube in the two-level boost circuit is controlled to be closed, so that a current at the input port is shunted, and flows through the main power tube to form a closed loop. Therefore, a current reaching the output port of the combiner box is reduced, and a cable at the output port of the combiner box and the combiner box are protected from being damaged. The combiner box has a boost circuit. Therefore, a main power tube in the boost circuit may be controlled to shunt a current, without adding a new hardware circuit. Therefore, costs are reduced and simple control is implemented.

### Combiner box embodiment 3

A combiner box including a two-level boost circuit is described above. A combiner box including a three-level boost circuit with a flying capacitor is described below.

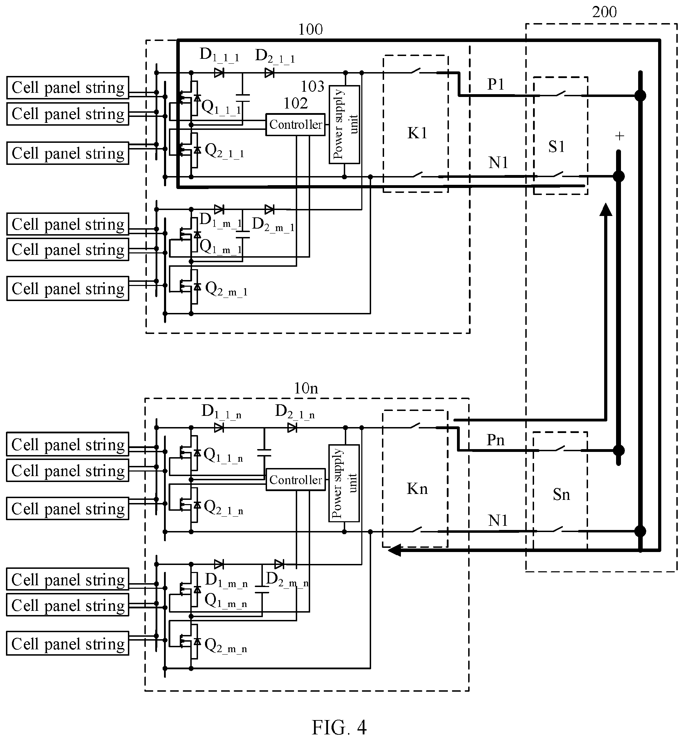

FIG. 4 is a schematic diagram of a combiner box that includes a three-level boost circuit provided in this embodiment of this application.

When a DC/DC converter includes a three-level boost circuit, a switching device includes at least two main power tubes connected in series in the three-level boost circuit, and the two main power tubes connected in series are connected between a positive input port and a negative input port.

A controller is specifically configured to control the two main power tubes connected in series to be closed when at least one parameter meets at least one condition and an input voltage of the DC/DC converter is less than a preset voltage value.

The three-level boost circuit includes two main power tubes, for example, two main power tubes in a first three-level boost circuit are Q1_1_1 and Q2_1_1, and two main power tubes in an m^{th} three-level boost circuit are Q1_m_1 and Q2_m_1. The two main power tubes are connected in series and then connected in parallel to a positive input port and a negative input port of the three-level boost circuit.

For the three-level boost circuit, when it is determined that a short circuit occurs between a positive output cable and a negative output cable of the combiner box, or the positive output cable and the negative output cable are reversely connected, the two main power tubes connected in series in the three-level boost circuit needs to be controlled to be closed, so that the main power tubes and an input port of the combiner box form a closed loop, to be specific, Q1_1_1 and Q2_1_1 are closed, and Q1_m_1 and Q2_m_1 are closed.

In addition to the two main power tubes, the three-level boost circuit further includes two diodes D1_1_1 and D2_1_1, and D1_m_1 and D2_m_1, as shown in the figure.

The first three-level boost circuit is used as an example for description in the following. When both Q1_1_1 and Q2_1_1 are closed, most currents of a cell panel string flow through Q1_1_1 and Q2_1_1. The diodes have a larger conduction voltage drop than the main power tubes, so that a current reaching an output port of the combiner box through D1_1_1 and D2_1_1 is greatly reduced. Therefore, a power cable between the combiner box and the inverter may be protected, and the combiner box may be protected from being damaged.

Other parts are controlled based on an operating principle the same as that of the combiner box that includes a two-level boost circuit described in the foregoing embodiments. Details are not described herein again. For example, a power supply unit 103 may supply power to a sampling circuit and the controller 102. When a main power tube is controlled to be closed, K1 is controlled to be opened.

A current path indicated by an arrow in the figure is a path when the positive output cable and the negative output cable of the combiner box are reversely connected.

The combiner box provided in this embodiment includes a three-level boost circuit. Therefore, when a short circuit or reverse connection occurs to the output port of the combiner box, the two main power tubes in the three-level boost circuits are controlled to be closed, so that a current at the input port of the combiner box is shunted and a current at the output port of the combiner box is reduced, to protect the positive output cable and the negative output cable of the combiner box. That is, the power cable is protected from overcurrent burnout, and when the positive output cable and the negative output cable are reversely connected, the combiner box is protected from being damaged. Because the combiner box has a three-level boost circuit, the main power tubes in the three-level boost circuit may be controlled to implement short circuit protection or reverse connection protection. In this case, a short-circuit current is shunted without a new hardware circuit. This is easy to implement, costs are reduced, and simple control is implemented.

### Combiner box embodiment 4

The foregoing describes a combiner box with a boost function. The following describes a combiner box that is a normal combiner box, does not include a DC/DC converter, and has only a simple converging function. A switching device is connected in parallel between a positive input port and a negative input port of the combiner box. The switching device may be added when no such switching device exists.

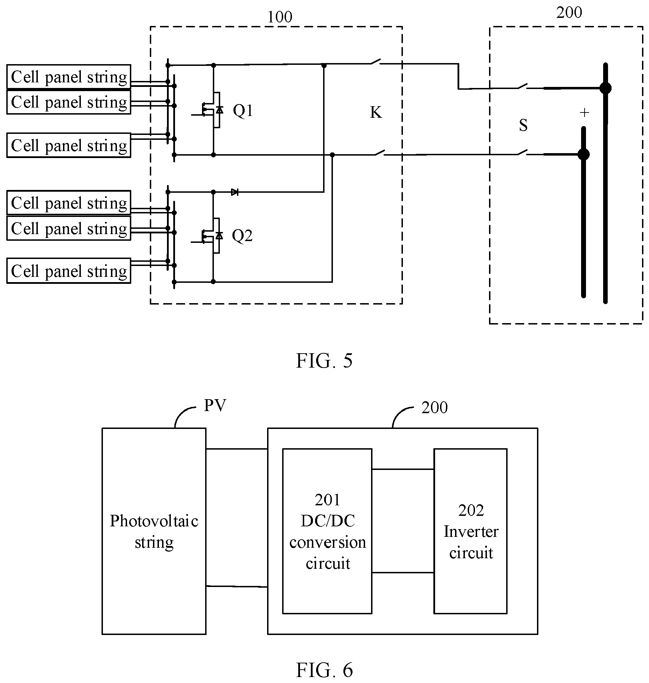

FIG. 5 is a schematic diagram of a simple combiner box provided in this embodiment of this application.

The combiner box 100 provided in this embodiment does not include a DC/DC converter. The combiner box 100 has only a simple converging function, to be specific, input currents of cell panel strings are converged and output to an inverter 200.

In the figure, one combiner box is used as an example, and that each combiner box includes two circuits is used as an example. Input ports of the two circuits each are connected to a corresponding photovoltaic string, and output ports of the two circuits are connected in parallel to implement a converging function.

In this embodiment, a specific quantity of photovoltaic strings is not specifically limited, and a connection relationship and a quantity of photovoltaic panels in the photovoltaic strings are also not specifically limited. For example, a plurality of photovoltaic strings in which photovoltaic cells are connected in series and in parallel may
be included.

Switching devices Q1 and Q2 at an input port of each branch of the combiner box 100 may be newly added or existing devices. When a short circuit or reverse connection occurs to an output port of the combiner box 100, Q1 and Q2 are controlled to be closed, so that a current flows through Q1 and Q2. Therefore, a current reaching the output port of the combiner box 100 is reduced, and a cable at the output port of the combiner box 100 is protected, and the combiner box is protected from being damaged. Similarly, when Q1 and Q2 are closed, K is controlled to be opened. Q1 and Q2 are short-circuited, and in this case, an output voltage of the combiner box is clamped. That is, the output voltage of the combiner box is low, and K is easily opened. If the output voltage of the combiner box is high, there is a risk that K cannot be opened.

FIG. 5 is a schematic diagram in which a positive output port and a negative output port of the combiner box 100 are reversely connected.

A DC/DC converter may not be included inside the combiner box provided in this embodiment. When a short circuit or reverse connection occurs to the output port of the combiner box, the switching device connected in parallel between a positive input port and a negative input port of the combiner box may be controlled to be closed, so that the positive input port and the negative input port are turned on through the closed switching device. A current path is that a current flows from the positive input port of the combiner box to the negative input port of the combiner box through the closed breaking device, to form a closed loop. Therefore, when a short circuit occurs to the output port of the combiner box or a next circuit of the output port, most the short-circuit currents flow through the closed switching device to form a return current, so that a current that is generated by the input port of the combiner box and that is output from the output port of the combiner is greatly reduced, that is, an output current of the combiner box is reduced Therefore, the positive output cable and the negative output cable of the combiner box can be prevented from overcurrent burnout when the output current of the combiner box is excessively large, that is, a power cable is protected from overcurrent burnout. In addition, in this technical solution, the combiner box may be protected when the positive output cable and the negative output cable are reversely connected.

### Inverter embodiment

In the foregoing embodiments, the combiner box and the inverter are disposed separate from each other. When the combiner box includes the DC/DC converter, the DC/DC converter is disposed inside the combiner box and the inverter is disposed outside the combiner box.

An embodiment of this application further provides an inverter. A DC/DC conversion circuit is included inside the inverter, to be specific, a DC/DC circuit and an inverter circuit are included inside the inverter, so that the inverter has a boost function and an inversion function.

FIG. 6 is a schematic diagram of the inverter provided in this embodiment of this application.

This embodiment provides the inverter 200 that includes the DC/DC circuit 201, the inverter circuit 202, a sampling circuit (not shown in the figure), and a controller (not shown in the figure).

An input port of the DC/DC circuit 201 is connected to a photovoltaic array PV, to convert a direct current of the photovoltaic array PV and output a converted current.

The photovoltaic array may include a plurality of photovoltaic strings in the figure. This is not specifically limited herein.

The inverter circuit 202 is configured to convert a direct current output by the DC/DC circuit 201 into an alternating current and output the alternating current.

The sampling circuit is configured to collect at least one of an input parameter and an output parameter of the DC/DC circuit.

The controller is configured to control a main power tube of the DC/DC circuit to be closed when determining, based on the at least one parameter, that a short circuit occurs to an output port of the DC/DC conversion circuit, the inverter circuit, or an output port of the inverter circuit, so that the main power tube and the input port of the DC/DC circuit form a closed loop.

In this embodiment, when it is determined that the output port of the DC/DC conversion circuit is short-circuited, the main power tube may be controlled to be closed, or when a short circuit occurs to the inverter circuit or the output port of the inverter, the main power tube may be controlled to be closed, to implement short-circuit protection.

The at least one parameter includes a voltage and a current.

The at least one parameter includes an output voltage of the DC/DC conversion circuit, an output current of the DC/DC conversion circuit, an input voltage of the DC/DC conversion circuit, and an input current of the DC/DC conversion circuit.

The controller is configured to control a switching device to be closed when the at least one parameter meets at least one of the following conditions. The at least one condition includes: A drop rate of the output voltage of the DC/DC conversion circuit exceeds a fifth preset value, a drop rate of the input voltage of the DC/DC conversion circuit exceeds a sixth preset value, a rise rate of the output current of the DC/DC conversion circuit exceeds a seventh preset value, and a rise rate of the input current of the DC/DC conversion circuit exceeds an eighth preset value.

The fifth preset value, the sixth preset value, the seventh preset value, and the eighth preset value may be set based on an actual control requirement and actual application scenario. This is not specifically limited in this embodiment of this application.

In this embodiment of this application, a specific topological form of the DC/DC circuit 201 is not specifically limited. For example, the DC/DC circuit may be a two-level boost circuit, a three-level boost circuit, or a buck-boost circuit.

The DC/DC circuit 201 has the switching device, namely, the main power tube. When the output port of the DC/DC circuit, namely, an input port of the inverter circuit is short-circuited, that is, a short circuit occurs between a positive direct current bus and a negative direct current bus, the main power tube in the DC/DC circuit is controlled to be closed, so that most currents flow through the main power tube. In this case, a current reaching the output port of the DC/DC circuit, namely, a direct current bus current is reduced, and the direct current buses are protected from overcurrent, to further protect the inverter.

In the foregoing embodiments of this application, a specific type of the main power tube is not limited, and the main power tube may be, for example, a device having an on-off control capability such as a circuit breaker, a relay, a transistor, an IGBT, or a MOS.

In the foregoing embodiment, when there is another switch connected in parallel to the main power tube, the controller is further configured to, when controlling the main power tube in the DC/DC converter to be closed, control the switch, connected in parallel to the main power tube in the DC/DC converter, to be closed. In this way, a shunting branch may be increased, and a current at an output port may be further reduced, to play a protective role.

### Photovoltaic system embodiment

Based on the combiner box and the inverter provided in the foregoing embodiments, this embodiment of this application further provide a photovoltaic system. The photovoltaic system is described in detail below with reference to a drawing.

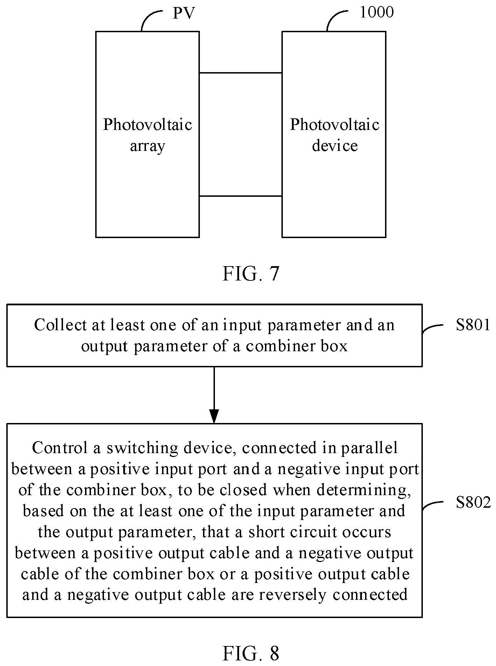

FIG. 7 is a schematic diagram of a photovoltaic system according to an embodiment of this application.

The photovoltaic system provided in this embodiment includes a photovoltaic array PV and a photovoltaic device 1000. The photovoltaic device may be the combiner box described in the foregoing embodiments or the inverter described in the foregoing embodiments.

An input port of the photovoltaic device 1000 is connected to the photovoltaic array PV.

FIG. 7 simply shows only a connection relationship of the photovoltaic system. For a specific internal connection relationship, refer to FIG. 3 and FIG. 4. Details are not described herein again.

As shown in FIG. 3 and FIG. 4, an input port of an inverter in a photovoltaic station is usually connected to a plurality of combiner boxes, to increase a power of the inverter. Output ports of the plurality of combiner boxes are connected in parallel, that is, there are at least two combiner boxes. The output ports of the two combiner boxes are connected to the input port of the inverter.

The photovoltaic system includes the combiner box described in the foregoing embodiments. Therefore, when a short circuit occurs between the positive output port and the negative output port of the combiner box, or the positive output port and the negative output port are reversely connected, a switching device connected in parallel to the positive input port and the negative input port of the combiner box is controlled to be closed, so that a current at an output port of the combiner box is greatly reduced, a power cable at the output port of the combiner box is protected, and the combiner box is protected from being damaged. Therefore, when a short circuit fault or reverse connection fault occurs to the combiner box, the photovoltaic system is timely protected, so that the entire photovoltaic system is prevented from being damaged by a short circuit. In addition, when the photovoltaic device in the photovoltaic system is an inverter, because the inverter includes a DC/DC conversion circuit and a main power tube in the DC/DC conversion circuit is connected in parallel between a positive input port and a negative input port of the photovoltaic device, the main power tube is controlled to be closed to protect an output port when a short circuit or reverse connection occurs.

### Method embodiment

Based on the combiner box, the inverter, and the photovoltaic system provided in the foregoing embodiments, this embodiment of this application further provides a direct current combiner box protection method. The protection method is described in detail below with reference to a drawing.

FIG. 8 is a flowchart of the direct current combiner box protection method provided in this embodiment of this application.

The direct current combiner box protection method provided in this embodiment is applied to the combiner box described in the foregoing embodiments. The method includes the following steps.

S801: Collect at least one of an input parameter and an output parameter of the combiner box.

S802: Control a switching device to be closed when determining, based on the at least one parameter, that a short circuit occurs between a positive output cable and a negative output cable or a positive output cable and a negative output cable are reversely connected, so that the switching device, a positive input port, and a negative input port form a closed loop.

In actual application, the input parameter or the output parameter of the combiner box may be collected to determine whether a short circuit fault or reverse connection occurs.

For example, when the input parameter of the combiner box, a sampling circuit may collect an input voltage of the combiner box or an input current of the combiner box.

When collecting the output parameter of the combiner box, a sampling circuit may collect an output voltage of the combiner box or an output current of the combiner box.

When a short circuit occurs between the positive output cable and the negative output cable of the combiner box, the input voltage or output voltage of the combiner box drops sharply, and the input current and output current of the combiner box rise sharply. Therefore, when the at least one parameter collected by the sampling circuit meets at least one of the following conditions, the controller controls the switching device to be closed. The at least one condition includes: A drop rate of the output voltage of the combiner box exceeds a first preset value, a drop rate of the input voltage of the combiner box exceeds a second preset value, a rise rate of the output current of the combiner box exceeds a third preset value, and a rise rate of the input current of the combiner box exceeds a fourth preset value.

In specific application, drop rates and rise rates of the parameters each may be obtained by using a parameter change slope. In an example in which the output voltage of the combiner box is collected, if a slope when the output voltage drops exceeds the first preset value, it is considered that the output voltage of the combiner box drops sharply, and it is considered that a short circuit occurs between the positive output cable and the negative output cable of the combiner box. Other parameters are determined in the same way. Details are not described herein again.

In the method, when the at least one of the input parameter and the output parameter of the combiner box is detected and used to determine that a short circuit occurs between the positive output cable and the negative output cable of the combiner box or the positive output cable and the negative output cable are reversely connected, the switching device between the positive input port and the negative input port of the combiner box is controlled to be closed. The switching device is connected in parallel to an input port of the combiner box. Therefore, when the switching device is closed, a current path is that a current flows from the positive input port of the combiner box to the negative input port of the combiner box through the closed switching device, that is, a closed loop is formed. In this way, when a short circuit occurs, most short-circuit currents flow through the closed switching device to form a return current, so that a current output from the combiner box is greatly reduced. Therefore, a power cable can be prevented from overcurrent burnout when an output current of the combiner box is excessively large, or the combiner box is prevented from being damaged when the positive output cable and the negative output cable are reversely connected.

It should be understood that, in this application, "at least one" means one or more, and "a plurality of" means two or more. The term "and/or" is used to describe an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

## Claims

1. A direct current combiner box (100), wherein a positive input port of the combiner box (100) is connected to a first end of a photovoltaic array (PV), a negative input port of the combiner box (100) is connected to a second end of the photovoltaic array (PV), a positive output port of the combiner box (100) is connected to a positive input port of an inverter (200) through a positive output cable, and a negative output port of the combiner box (100) is connected to a negative input port of the inverter (200) through a negative output cable;
the combiner box (100) comprises a switching device, a sampling circuit (101), and a controller (102);
the switching device is connected in parallel between the positive input port and the negative input port;
the sampling circuit (101) is configured to collect at least one of an input parameter and an output parameter of the combiner box (104); and
the controller (102) is configured to control the switching device to be closed when determining, based on the at least one parameter, that a short circuit occurs between the positive output cable and the negative output cable or the positive output cable and the negative output cable are reversely connected, so that the switching device, the positive input port, and the negative input port form a closed loop;
wherein the combiner box (100) further comprises a DC/DC converter;
the DC/DC converter is configured to convert a direct current output by the photovoltaic array (PV) and then output a converted current to the inverter (200);
the switching device comprises at least a main power tube (Q_{1_1} to Q_{m_n}) in the DC/DC converter; and
the controller (102) is specifically configured to control the main power tube (Q_{1_1} to Q_{m_n}) in the DC/DC converter to be closed, so that the main power tube (Q_{1_1} to Q_{m_n}), the positive input port, and the negative input port form a closed loop; and
wherein the controller (102) is further configured to control a switch connected in parallel to the main power tube (Q_{1_1} to Q_{m_n}) in the DC/DC converter to be closed when controlling the main power tube (Q_{1_1} to Q_{m_n}) in the DC/DC converter to be closed.

2. The combiner box (100) according to claim 1, wherein the sampling circuit (101) is specifically configured to collect at least one of the following: an output voltage of the combiner box (100), an output current of the combiner box (100), an input voltage of the combiner box (100), and an input current of the combiner box (100);
the controller (102) is configured to control the switching device to be closed when the at least one parameter meets at least one of the following conditions; and
the at least one condition comprises: a drop rate of the output voltage of the combiner box (100) exceeds a first preset value, a drop rate of the input voltage of the combiner box (100) exceeds a second preset value, a rise rate of the output current of the combiner box (100) exceeds a third preset value, and a rise rate of the input current of the combiner box (100) exceeds a fourth preset value.

3. The combiner box (100) according to claim 1, wherein the controller (102) is specifically configured to control the main power tube (Q_{1_1} to Q_{m_n}) in the DC/DC converter to be closed when the at least one parameter meets the at least one condition and an input voltage of the DC/DC converter is less than a preset voltage value.

4. The combiner box (100) according to claim 3, wherein the DC/DC converter comprises at least one of the following: a two-level boost circuit, a three-level boost circuit, or a buck-boost circuit.

5. The combiner box (100) according to claim 1, wherein the combiner box (100) further comprises an output switch (K1 to Kn);
the output switch (K1 to Kn) is connected in series to the positive output port and/or the negative output port of the combiner box (100); and
the controller (102) is further configured to, after controlling the switching device to be closed, control the output switch (K1 to Kn) to be opened.

6. The combiner box (100) according to claim 1, wherein the combiner box (100) comprises at least two DC/DC converters;
output ports of the at least two DC/DC converters are connected in parallel; and
input ports of the at least two DC/DC converters are connected to different photovoltaic strings respectively, and all the photovoltaic strings form the photovoltaic array (PV).

7. A photovoltaic system, comprising a photovoltaic array (PV) and a photovoltaic device (1000), wherein the photovoltaic device (1000) is the combiner box (100) according to any one of claims 1 to 6; and
an input port of the photovoltaic device (1000) is connected to the photovoltaic array (PV).

8. A direct current combiner box protection method, applied to the combiner box (100) according to any one of claims 1 to 6, wherein the method comprises:
collecting (S801) at least one of an input parameter and an output parameter of the combiner box; and
controlling (S802) a switching device to be closed when determining, based on the at least one parameter, that a short circuit occurs between a positive output cable and a negative output cable or a positive output cable and a negative output cable are reversely connected, so that the switching device, a positive input port, and a negative input port form a closed loop.

9. The method according to claim 8, wherein the controlling (S802) a switching device to be closed when determining, based on the at least one parameter, that a short circuit occurs between a positive output cable and a negative output cable or a positive output cable and a negative output cable are reversely connected specifically comprises:
controlling the switching device to be closed when the at least one parameter meets at least one of the following conditions, wherein
the at least one condition comprises: a drop rate of an output voltage of the combiner box exceeds a first preset value, a drop rate of an input voltage of the combiner box exceeds a second preset value, a rise rate of an output current of the combiner box exceeds a third preset value, and a rise rate of an input current of the combiner box exceeds a fourth preset value; and
the at least one parameter comprises the output voltage of the combiner box, the output current of the combiner box, the input voltage of the combiner box, and the input current of the combiner box.

## Patentansprüche

1. Gleichstrom-Kombinatorkasten (100), wobei ein positiver Eingangsanschluss des Kombinatorkastens (100) mit einem ersten Ende eines Photovoltaik-Arrays (PV) verbunden ist, ein negativer Eingangsanschluss des Kombinatorkastens (100) mit einem zweiten Ende des Photovoltaik-Arrays (PV) verbunden ist, ein positiver Ausgangsanschluss des Kombinatorkastens (100) mit einem positiven Eingangsanschluss eines Inverters (200) durch ein positives Ausgangskabel verbunden ist und ein negativer Ausgangsanschluss des Kombinatorkastens (100) mit einem negativen Eingangsanschluss des Inverters (200) durch ein negatives Ausgangskabel verbunden ist;
wobei der Kombinatorkasten (100) ein Schaltgerät, eine Abtastschaltung (101) und eine Steuerung (102) umfasst;
wobei das Schaltgerät parallel zwischen dem positiven Eingangsanschluss und dem negativen Eingangsanschluss verbunden ist;
wobei die Abtastschaltung (101) dazu konfiguriert ist, mindestens eines eines Eingangsparameters und eines Ausgangsparameters des Kombinatorkastens (104) zu erfassen; und
wobei die Steuerung (102) dazu konfiguriert ist, das Schaltgerät so zu steuern, dass es geschlossen wird, wenn basierend auf dem mindestens einen Parameter bestimmt wird, dass ein Kurzschluss zwischen dem positiven Ausgangskabel und dem negativen Ausgangskabel auftritt oder das positive Ausgangskabel und das negative Ausgangskabel umgekehrt verbunden sind, so dass das Schaltgerät, der positive Eingangsanschluss und der negative Eingangsanschluss einen geschlossenen Kreis bilden;
wobei der Kombinatorkasten (100) ferner einen DC/DC-Wandler umfasst;
wobei der DC/DC-Wandler dazu konfiguriert ist, einen durch das Photovoltaik-Array (PV) ausgegebenen Gleichstrom umzuwandeln und dann einen umgewandelten Strom an den Inverter (200) auszugeben;
wobei das Schaltgerät mindestens eine Hauptleistungsröhre (Q_{1_1} bis Q_{m_n}) in dem DC/DC-Wandler umfasst; und
wobei die Steuerung (102) insbesondere dazu konfiguriert ist, die Hauptleistungsröhre (Q_{1_1} bis Q_{m_n}) in dem DC/DC-Wandler so zu steuern, dass sie geschlossen wird, so dass die Hauptleistungsröhre (Q_{1_1} bis Q_{m_n}), der positive Eingangsanschluss und der negative Eingangsanschluss einen geschlossenen Kreis bilden; und
wobei die Steuerung (102) ferner dazu konfiguriert ist, einen Schalter, der parallel mit der Hauptleistungsröhre (Q_{1_1} bis Q_{m_n}) in dem DC/DC-Wandler verbunden ist, so zu steuern, dass er geschlossen wird, wenn die Hauptleistungsröhre (Q_{1_1} bis Q_{m_n}) in dem DC/DC-Wandler so gesteuert wird, dass sie geschlossen wird.

2. Kombinatorkasten (100) nach Anspruch 1, wobei die Abtastschaltung (101) insbesondere dazu konfiguriert ist, mindestens eines der Folgenden zu erfassen: eine Ausgangsspannung des Kombinatorkastens (100), einen Ausgangsstrom des Kombinatorkastens (100), eine Eingangsspannung des Kombinatorkastens (100) und einen Eingangsstrom des Kombinatorkastens (100);
wobei die Steuerung (102) dazu konfiguriert ist, das Schaltgerät so zu steuern, dass es geschlossen wird, wenn der mindestens eine Parameter mindestens eine der folgenden Bedingungen erfüllt; und
wobei die mindestens eine Bedingung Folgendes umfasst: eine Abfallrate der Ausgangsspannung des Kombinatorkastens (100) übersteigt einen ersten voreingestellten Wert, eine Abfallrate der Eingangsspannung des Kombinatorkastens (100) übersteigt einen zweiten voreingestellten Wert, eine Anstiegsrate des Ausgangsstroms des Kombinatorkastens (100) übersteigt einen dritten voreingestellten Wert und eine Anstiegsrate des Eingangsstroms des Kombinatorkastens (100) übersteigt einen vierten voreingestellten Wert.

3. Kombinatorkasten (100) nach Anspruch 1, wobei die Steuerung (102) insbesondere dazu konfiguriert ist, die Hauptleistungsröhre (Q_{1_1} bis Q_{m_n}) in dem DC/DC-Wandler so zu steuern, dass sie geschlossen wird, wenn der mindestens eine Parameter die mindestens eine Bedingung erfüllt und eine Eingangsspannung des DC/DC-Wandlers kleiner als ein voreingestellter Spannungswert ist.

4. Kombinatorkasten (100) nach Anspruch 3, wobei der DC/DC-Wandler mindestens eines der Folgenden umfasst: eine zweistufige Hochsetzschaltung, eine dreistufige Hochsetzschaltung oder eine Tiefsetz-Hochsetzschaltung.

5. Kombinatorkasten (100) nach Anspruch 1, wobei der Kombinatorkasten (100) ferner einen Ausgangsschalter (K1 bis Kn) umfasst;
wobei der Ausgangsschalter (K1 bis Kn) in Reihe mit dem positiven Ausgangsanschluss und/oder dem negativen Ausgangsanschluss des Kombinatorkastens (100) verbunden ist; und
wobei die Steuerung (102) ferner dazu konfiguriert ist, nach Steuern des Schaltgeräts so, dass es geschlossen wird, den Ausgangsschalter (K1 bis Kn) so zu steuern, dass er geöffnet wird.

6. Kombinatorkasten (100) nach Anspruch 1, wobei der Kombinatorkasten (100) mindestens zwei DC/DC-Wandler umfasst;
wobei Ausgangsanschlüsse der mindestens zwei DC/DC-Wandler parallel verbunden sind; und
wobei Eingangsanschlüsse der mindestens zwei DC/DC-Wandler jeweils mit unterschiedlichen Photovoltaiksträngen verbunden sind und alle Photovoltaikstränge das Photovoltaik-Array (PV) bilden.

7. Photovoltaiksystem, das ein Photovoltaik-Array (PV) und ein Photovoltaikgerät (1000) umfasst, wobei das Photovoltaikgerät (1000) ein Kombinatorkasten (100) nach einem der Ansprüche 1 bis 6 ist; und
wobei ein Eingangsanschluss des Photovoltaikgeräts (1000) mit dem Photovoltaik-Array (PV) verbunden ist.

8. Gleichstrom-Kombinatorkasten-Schutzverfahren, das auf den Kombinatorkasten (100) nach einem der Ansprüche 1 bis 6 angewendet wird, wobei das Verfahren Folgendes umfasst:
Erfassen (S801) mindestens eines eines Eingangsparameters und eines Ausgangsparameters des Kombinatorkastens; und
Steuern (S802) eines Schaltgeräts so, dass es geschlossen wird, wenn basierend auf dem mindestens einen Parameter bestimmt wird, dass ein Kurzschluss zwischen einem positiven Ausgangskabel und einem negativen Ausgangskabel auftritt oder ein positives Ausgangskabel und ein negatives Ausgangskabel umgekehrt verbunden sind, so dass das Schaltgerät, ein positiver Eingangsanschluss und ein negativer Eingangsanschluss einen geschlossenen Kreis bilden.

9. Verfahren nach Anspruch 8, wobei das Steuern (S802) eines Schaltgeräts so, dass es geschlossen wird, wenn basierend auf dem mindestens einen Parameter bestimmt wird, dass ein Kurzschluss zwischen einem positiven Ausgangskabel und einem negativen Ausgangskabel auftritt oder ein positives Ausgangskabel und ein negatives Ausgangskabel umgekehrt verbunden sind, insbesondere Folgendes umfasst:
Steuern des Schaltgeräts so, dass es geschlossen wird, wenn der mindestens eine Parameter mindestens eine der folgenden Bedingungen erfüllt, wobei
die mindestens eine Bedingung Folgendes umfasst: eine Abfallrate einer Ausgangsspannung des Kombinatorkastens übersteigt einen ersten voreingestellten Wert, eine Abfallrate einer Eingangsspannung des Kombinatorkastens übersteigt einen zweiten voreingestellten Wert, eine Anstiegsrate eines Ausgangsstroms des Kombinatorkastens übersteigt einen dritten voreingestellten Wert und eine Anstiegsrate eines Eingangsstroms des Kombinatorkastens übersteigt einen vierten voreingestellten Wert; und
der mindestens eine Parameter die Ausgangsspannung des Kombinatorkastens, den Ausgangsstrom des Kombinatorkastens, die Eingangsspannung des Kombinatorkastens und den Eingangsstrom des Kombinatorkastens umfasst .

## Revendications

1. Boîte de combinaison de courant continu (100), dans laquelle un port d'entrée positif de la boîte de combinaison (100) est connecté à une première extrémité d'un réseau photovoltaïque (PV), un port d'entrée négatif de la boîte de combinaison (100) est connecté à une deuxième extrémité du réseau photovoltaïque (PV), un port de sortie positif de la boîte de combinaison (100) est connecté à un port d'entrée positif d'un onduleur (200) par l'intermédiaire d'un câble de sortie positif, et un port de sortie négatif de la boîte de combinaison (100) est connecté à un port d'entrée négatif de l'onduleur (200) par l'intermédiaire d'un câble de sortie négatif ;
la boîte de combinaison (100) comprenant un dispositif de commutation, un circuit d'échantillonnage (101), et un dispositif de commande (102) ;
le dispositif de commutation étant connecté en parallèle entre le port d'entrée positif et le port d'entrée négatif ;
le circuit d'échantillonnage (101) étant configuré de façon à recueillir au moins soit un paramètre d'entrée, soit un paramètre de sortie de la boîte de combinaison (104) ; et le dispositif de commande (102) étant configuré de façon à commander la fermeture du dispositif de commutation lorsqu'il détermine, en se basant sur l'au moins un paramètre, qu'un court-circuit se produit entre le câble de sortie positif et le câble de sortie négatif ou que le câble de sortie positif et le câble de sortie négatif sont connectés inversement, de façon que le dispositif de commutation, le port d'entrée positif et le port d'entrée négatif forment une boucle fermée ;
la boîte de combinaison (100) comportant en outre un convertisseur CC/CC ;
le convertisseur CC/CC étant configuré de façon à convertir une sortie de courant continu fournie par le réseau photovoltaïque (PV) puis à fournir un courant converti à l'onduleur (200) ;
le dispositif de commutation comportant au moins un tube de puissance principal (Q_{1_1} à Q_{m_n}) dans le convertisseur CC/CC ; et
le dispositif de commande (102) étant configuré spécifiquement de façon à commander la fermeture du tube de puissance principal (Q_{1_1} à Q_{m_n}) dans le convertisseur CC/CC, de façon que le tube de puissance principal (Q_{1_1} à Q_{m_n}), le port d'entrée positif, et le port d'entrée négatif forment une boucle fermée ; et
le dispositif de commande (102) étant configuré en outre de façon à commander la fermeture d'un commutateur connecté en parallèle au tube de puissance principal (Q_{1_1} à Q_{m_n}) dans le convertisseur CC/CC lorsqu'il commande la fermeture du tube de puissance principal (Q_{1_1} à Q_{m_n}) dans le convertisseur CC/CC.

2. Boîte de combinaison (100) selon la revendication 1, dans laquelle le circuit d'échantillonnage (101) est configuré spécifiquement de façon à recueillir au moins un des paramètres suivants : une tension de sortie de la boîte de combinaison (100), un courant de sortie de la boîte de combinaison (100), une tension d'entrée de la boîte de combinaison (100), et un courant d'entrée de la boîte de combinaison (100) ;
le dispositif de commande (102) est configuré de façon à commander la fermeture du dispositif de commutation lorsque l'au moins un paramètre répond à au moins une des conditions suivantes ; et
l'au moins une condition consistant en : un taux de chute de la tension de sortie de la boîte de combinaison (100) dépasse une première valeur prédéterminée, un taux de chute de la tension d'entrée de la boîte de combinaison (100) dépasse une deuxième valeur prédéterminée, un taux de montée du courant de sortie de la boîte de combinaison (100) dépasse une troisième valeur prédéterminée, et un taux de montée du courant d'entrée de la boîte de combinaison (100) dépasse une quatrième valeur prédéterminée.

3. Boîte de combinaison (100) selon la revendication 1, dans lequel le dispositif de commande (102) est configuré spécifiquement de façon à commander la fermeture du tube de puissance principal (Q_{1_1} à Q_{m_n}) dans le convertisseur CC/CC lorsque l'au moins un paramètre répond à l'au moins une condition et qu'une tension d'entrée du convertisseur CC/CC est plus petite qu'une valeur de tension prédéterminée.

4. Boîte de combinaison (100) selon la revendication 3, dans laquelle le convertisseur CC/CC comporte au moins un des circuits suivants : un circuit survolteur à deux niveaux, un circuit survolteur à trois niveaux, ou un circuit dévolteur-survolteur.

5. Boîte de combinaison (100) selon la revendication 1, la boîte de combinaison (100) comprenant en outre un commutateur de sortie (Kl à Kn),
le commutateur de sortie (Kl à Kn) étant connecté en série au port de sortie positif et/ou au port de sortie négatif de la boîte de combinaison (100) ;
le dispositif de commande (102) étant configuré en outre de façon à, après avoir commandé la fermeture du dispositif de commutation, commander l'ouverture du commutateur de sortie (Kl à Kn).

6. Boîte de combinaison (100) selon la revendication 1, la boîte de combinaison (100) comprenant au moins deux convertisseurs CC/CC ;
les ports de sortie des au moins deux convertisseurs CC/CC étant connectés en parallèle ; et
les ports d'entrée des au moins deux convertisseurs CC/CC étant connectés à différentes chaînes photovoltaïques respectivement, et toutes les chaînes photovoltaïques formant le réseau photovoltaïque (PV).

7. Système photovoltaïque, comprenant un réseau photovoltaïque (PV) et un dispositif photovoltaïque (1000), le dispositif photovoltaïque (1000) étant la boîte de combinaison (100) selon l'une quelconque des revendications 1 à 6 ; et
un port d'entrée du dispositif photovoltaïque (1000) étant connecté au réseau photovoltaïque (PV).

8. Procédé de protection de boîte de combinaison de courant continu, appliqué à la boîte de combinaison (100) selon l'une quelconque des revendications 1 à 6, le procédé comprenant :
la collecte (S801) d'au moins soit un paramètre d'entrée, soit un paramètre de sortie de la boîte de combinaison ; et
la commande (S802) de la fermeture d'un dispositif de commutation lorsqu'il est déterminé, en se basant sur l'au moins un paramètre, qu'un court-circuit se produit entre un câble de sortie positif et un câble de sortie négatif ou qu'un câble de sortie positif et un câble de sortie négatif sont connectés inversement, de façon que le dispositif de commutation, un port d'entrée positif et un port d'entrée négatif forment une boucle fermée.

9. Procédé selon la revendication 8, dans lequel la commande (S802) de la fermeture d'un dispositif de commutation lorsqu'il est déterminé, en se basant sur l'au moins un paramètre, qu'un court-circuit se produit entre un câble de sortie positif et un câble de sortie négatif ou qu'un câble de sortie positif et un câble de sortie négatif sont connectés inversement, comprend spécifiquement :
la commande de la fermeture du dispositif de commutation lorsque l'au moins un paramètre répond à au moins une des conditions suivantes,
l'au moins une condition comprenant : un taux de chute d'une tension de sortie de la boîte de combinaison dépasse une première valeur prédéterminée, un taux de chute d'une tension d'entrée de la boîte de combinaison dépasse une deuxième valeur prédéterminée, un taux de montée d'un courant de sortie de la boîte de combinaison dépasse une troisième valeur prédéterminée, et un taux de montée d'un courant d'entrée de la boîte de combinaison dépasse une quatrième valeur prédéterminée ; et
l'au moins un paramètre consistant en la tension de sortie de la boîte de combinaison, le courant de sortie de la boîte de combinaison, la tension d'entrée de la boîte de combinaison, et le courant d'entrée de la boîte de combinaison.
